**Europäisches Patentamt**

**European Patent Office**

**Office européen des brevets**

(19)

(11) Veröffentlichungsnummer: **0 320 673**
**B1**

(12) **EUROPÄISCHE PATENTSCHRIFT**

(45) Veröffentlichungstag der Patentschrift: **30.01.91**

(51) Int. Cl.⁵: **C 21 C 5/52, C 21 C 7/072**

(21) Anmeldenummer: **88119557.2**

(22) Anmeldetag: **24.11.88**

(54) **Metallurgisches Gefäss.**

(30) Priorität: **17.12.87 DE 3742861**

(43) Veröffentlichungstag der Anmeldung:
**21.06.89 Patentblatt 89/25**

(45) Bekanntmachung des Hinweises auf die
Patenterteilung:
**30.01.91 Patentblatt 91/05**

(84) Benannte Vertragsstaaten:
**AT BE CH DE ES FR GB GR IT LI LU NL SE**

(56) Entgegenhaltungen:
**EP-A-0 200 405       DE-C- 150 076**
**EP-A-0 240 998       DE-C-3 318 422**
**DE-A-1 583 221       FR-A-2 525 755**
**DE-B-1 261 529       US-A-1 763 248**

**STAHL UND EISEN, Band 106, Nr. 19, 22.**
**September 1986, Seiten 1003-1005, Düsseldorf,**
**DE; H. BAUER et al:"Badbewegung durch**
**Herdspülung im Lichtbogenofen"**

(73) Patentinhaber: **Thyssen Stahl Aktiengesellschaft**
**Kaiser-Wilhelm-Strasse 100**
**D-4100 Duisburg 11 (DE)**

(72) Erfinder: **Strunck, Fritz-Jürgen, Dipl.-Ing.**
**Am Birkenhain 7**
**D-4223 Voerde 2 (DE)**
Erfinder: **Wolf, Josef, Dipl.-Ing.**
**Zillestrasse 6**
**D-4130 Moers-Schwafheim (DE)**

(74) Vertreter: **Patentanwaltsbüro Cohausz & Florack**
**Schumannstrasse 97**
**D-4000 Düsseldorf 1 (DE)**

# EP 0 320 673 B1

## Beschreibung

Die Erfindung betrifft ein metallurgisches Gefäß, insbesondere einen Elektro-Lichtbogenofen zum Einleiten von Spülgasen in eine Metallschmelze, mit einem äußeren Blechmantel und einer feuerfesten Auskleidung sowie mit Spüleinrichtungen, die im Herd oder Boden angeordnet sind, bei dem der Herd oder Boden aus einem Dauerfutter aus Feuerfest-Steinen und einem Verschleißfutter aus feuerfester Stampmasse besteht.

Bei der Stahlherstellung gehören Behandlungen von Schmelzen mit Spülgasen im Rahmen der Sekundärmetallurgie seit langem zum Stand der Technik. Metallurgische Gefäße, in denen derartige Behandlungen durchgeführt werden, sind Pfannen, Öfen und Konverter.

Auch bei der Stahlherstellung im Elektro-Lichtbogenofen ist es bekannt, zur Badanregung und Intensivierung der metallurgischen Reaktionen durch den Ofenboden inerte Gase in das Schmelzbad einzuleiten. Beim Verfahrens der DE—OS 15 83 221 sind beispielsweise im Herd des Ofens unterhalb der Elektroden gasdurchlässige feuerfeste Steine angeordnet. Gasdurchlässige feuerfeste Steine haben jedoch den Nachteil einer geringen Lebensdauer gegenüber der angrenzenden feuerfesten Herdauskleidung.

Beim Elektro-Lichtbogenofen der europäischen Patentanmeldung 0 200 405 kann zur Unterstützung des Schmelzprozesses durch ein Rohrchen im Boden des Ofens ein Rührgas in die Schmelze eingeführt werden. Aus der Beschreibung können jedoch keine konkreten Angaben über die Ausbildung des Röhrchens und des Bodens entnommen werden. Die europäische Patentanmeldung 0 240 998 zeigt, daß das Röhrchen sowohl das Dauerfutter als auch das Verschleißfutter insgesamt durchsetzt. Das Röhrchen ist daher dem Verschließ durch die Schmelze direkt ausgesetzt. Beim Spülen/Rühren im Elektro-Lichtbogenofen sind fercer die geometrische Anordnung der Spülröhrchen im Boden und die Ausbildung des Spülfleckes wichtig, und zwar wegen der zu erzielenden Umwälzung des Schmelzbades und wegen der Forderung, daß ein ruhiges und gleichmäßiges Brennen der Lichtbögen einstellbar sein muß. Die Ausbildung des Spülfleckes ist von der Gasmenge und von der Art der Verteilung der austretenden Gasblasen an der Grenzfläche Boden/Schmelzbad abhängig.

Aus einer Veröffentlichung in der Zeitschritt "Stahl und Eisen" 106, 1986, Nr. 19, Seiten 1003 bis 1005 mit dem Titel "Badbewegung durch Herdspülung im Lichtbogenofen" ergibt sich, daß Argon als Spülgas durch ein spuralförmiges Röhrchen, welches im jeweils neu verfüllten Abstichkanal des Ofens angeordnet ist, in die Schmelze eingeleitet wird. Hierbei handelt es sich um eine Versuchsanordnung, zu der als nachteilig angegeben ist, daß das lose durch das Verfüllmaterial geführte Spülröhrchen eine Schwächung der Abstichfüllung bedeutet. Ferner ergibt sich aus der Veröffentlichung, daß das jedesmal notwendig werdende Einführen der Spülröhrchen in den Abstichkanal lästig und zeitaufwendig war und daß deshalb ein Spül-Set entwickelt wurde. Über die Ausbildung dieses Spül-Sets enthält die Veröffentlichung jedoch keine konkreten Einzelheiten.

Aus der DE-PS 33 18 422 ist eine Gasspülanordnung in der Wandung eines schmelzeenthaltenden Behälters bekannt, bei der das Spülröhrchen in der Behälterwandung längs verschiebbar gelagert ist. Durch diese Anordnung soll insbesondere erreicht werden, daß die Gasspülanordnung bei Unbrauchbarwerden durch einfrierende Metallschmelze im Spülröhrchen einfach und schnell wieder in Funktion gesetzt werden kann durch Nachschieben des Spülröhrchens. Bei Anwendung dieser Anordnung in einem Herd/Boden, bei dem das Verschleißfutter aus feuerfester Stampfmasse besteht, muß damit gerechnet werden, daß das austretende Gas über dem zurückgebrannten Spülröhrchen im gestampften Herd/Boden trichterförmige Auswaschungen hervorruft und die Haltbarkeit von Herd/Boden daher gering sein dürfte. Nachteilung dürfte ferner die mangelnde Abdichtung des nachschiebbaren Spülröhrchens im Bodenstein sein, wodurch ein Leck entstehen kann, durch das ein Teil des Spülgases verlorengeht.

Aus der US—A—1 763 248 ist es bekannt, Spülröhrchen zur Einleitung von Rührgasem im Verschleißfutter eines Elektro-Lichtbogenofens enden zu lassen, um auf diese Weise die Röhrchen zu schützen.

Aufgabe der vorliegenden Erfindung ist es, ein metallurgisches Gefäß, insbesondere einen Elektro-Lichtbogenfen der eingangs beschriebenen Art, vurzuschlagen, bei dem sowohl die Gasspüleinrichtung als auch das Verschleißfutter des Herdes oder Bodens eine hohe Lebensdauer aufweisen. Ferner soll bei verbesserter Spülwirkung der Schmelze durch ein auf eine große Fläche verteiltes Einleiten des Spülgases in die Metallschmelze eine Ausbildung des Spülfleckes erreicht werden, die ein gleichmäßiges und ruhiges Brennen der Lichtbögen sicherstellt.

Die Erfindung löst diese Aufgabe bei einem metallurgischen Gefäß der eingangs beschriebenen Art gemäß Anspruch 1 dadurch, daß die Spüleinrichtung im Dauerfutter des metallurgischen Gefäßes angeordnet ist. Bevorzugt ist oberhalb derselben im Verschließfutter ein Leitblech vorgesehen.

Das Spülgas wird somit durch das aus feuerfester Stampfmasse bestehende Verschleißfutter des Herdes geleitet, bevor es in die Schmelze eintritt. Auf diese Weise ist es möglich, das Verschleißfutter mit Hilfe des durchgeleiteten Spülgases zu kühlen. Diese führt zu einer merklichen Erhöhung der Haltbarkeit des Herdes.

Durch die gezielte Leitung des Rühr-/Spülgases infolge des bevorzugt angeordneten Leitbleches im Verschleißfutter können die Spülflecken in der Schmelzbadoberfläche vergrößert werden, z.B. von 400 mm Durchmesser auf ca. 1.200 mm Durchmesser. Bei verbessertem Spül- und Rühreffekt in der Schmelze wird die Badoberfläche selbst ruhiger, der Spülfleck wird größer und flacher, wodurch die Lichtbögen

2

gleichmäßiger und ruhiger brennen. Durch die Verteilung der Gasblasen auf eine größere Fläche wird außerdem das Herausschleudern von Stahlspritzern vermieden, so daß ein erhöhter Elektrodenabbrand verhindert wird.

Bei einer Abnutzung des Verschleißfutters bis ca. 90% kann das Verschleißfutter bei heißem oder bei kaltem metallurgischen Gefäß erneuert werden, ohne daß die Spüleinrichtung ausgewechselt werden muß. Erst bei der Erneuerung des Dauerfutters des metallurgischen Gefäßes wird ein Auswechseln der Spüleinrichtung erforderlich. Dies führt zu einer erheblichen Kostenreduzierung.

In weiterer Ausgestaltung der Erfindung ist das metallurgische Gefäß dadurch gekennzeichnet, daß die Spüleinrichtung aus Röhrchen besteht und daß im Dauerfutter Bodensteine mit einer Durchgangsöffnung angeordnet sind, in welche die Röhrchen durch eine Öffnung im Bodenblech hineinragen, wobei der innere Durchmesser d der Röhrchen bevorzugt 1 bis 8 mm beträgt.

Es ist weiter von Vorteil, wenn das Verhältnis des Durchmessers D des Leitbleches zum inneren Durchmesser d der Röhrchen 40:1 bis 100:1 beträgt und wenn der Abstand A des Leitbleches vom Bodenstein dem Zwei- bis Dreifachen des inneren Durchmessers d der Röhrchen entspricht. Die erfindungsgemäße Gasspülanordnung eignet sich jedoch nicht nur für den Herd von Elektro-Lichtbogenöfen, sondern kann mit Vorteil auch für andere metallurgische Gefäße, wie Pfannen und Konverter, eingesztzt werden, sofern der Boden dieser metallurgischen Gefäße aus einem Dauerfutter, aus feuerfesten Steinen und einem Verschleißfutter aus feuerfester Stampfmasse besteht. In diesen Fällen ist die Spüleinrichtung bevorzugt als feuerfester keramischer Spülstein mit einem zugehörigen feuerfesten Lochstein ausgebildet und im Dauerfutter des metallurgischen Gefäßes angeordnet. Bei dieser Ausführungsform beträgt der Abstand A des Leitbleches vom Spülstein bevorzugt 5 bis 50 mm.

In weiterer Ausgestaltung der Erfindung ist ein Elektro-Lichtbogenofen mit etwa kreisförmigem Herd dadurch gekennzeichnet, daß drei Spüleinrichtungen auf dem Elektrodenteilkreis jeweils mittig zwischen den Elektroden und eine weitere Spüleinrichtung zentral im Herd angeordnet sind.

Bei einem Elektro-Lichtbogenofen mit exzentrischem Bodenabstich ist es dagegen vorteilhaft, wenn die weitere Spüleinrichtung außerhalb des Elektrodenteilkreises im Bereich des Bodenabstiches angeordnet ist. Die Einleitung von Spülgas in diesen etwas kälteren Bereich führt zu einem verbesserten Aufschmelzen des dort liegenden Schrottes.

Auführungsbeispiele der Erfindung werden nachstehend anhand der Zeichnung erläutert. Es zeigt:

Fig. 1 einen Teilschnitt durch einen Herd eines Elektro-Lichtbogenofen mit einer ersten erfindungsgemäßen Ausführungsform der Spüleinrichtungen,

Fig. 2 einen entsprechenden Teilschnitt gemäß Fig. 1 in vergrößerter Darstellung,

Fig. 3 eine Draufsicht des Herdes in Richtung des Pfeiles P in Fig. 1 mit einer ersten erfindungsgemäßen Anordnung der Spüleinrichtungen,

Fig. 4 eine Draufsicht eines Herdes mit exzentrischem Bodenabstich mit einer zweiten erfindungsgemäßen Anordnung der Spüleinrichtungen und

Fig. 5 einen Teilschnitt in vergrößerter Darstellung mit einer zweiten erfindunggemäßen Ausführungsform der Spüleinrichtungen.

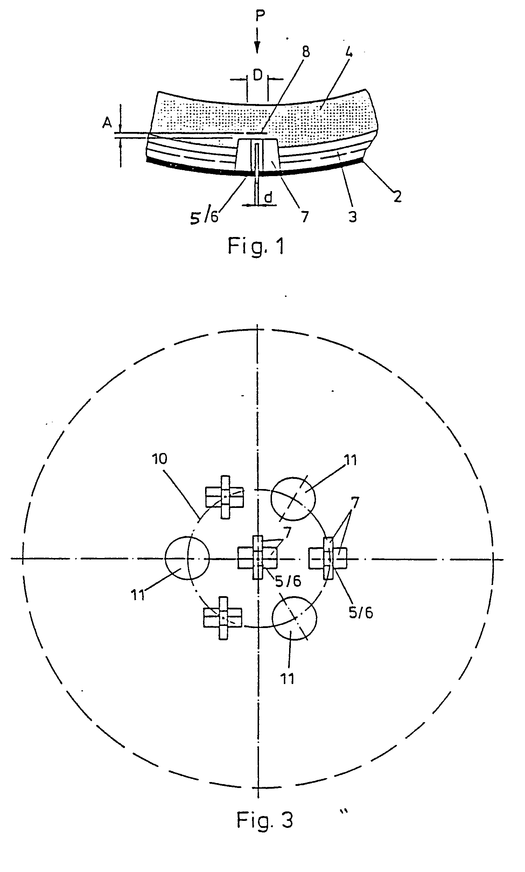

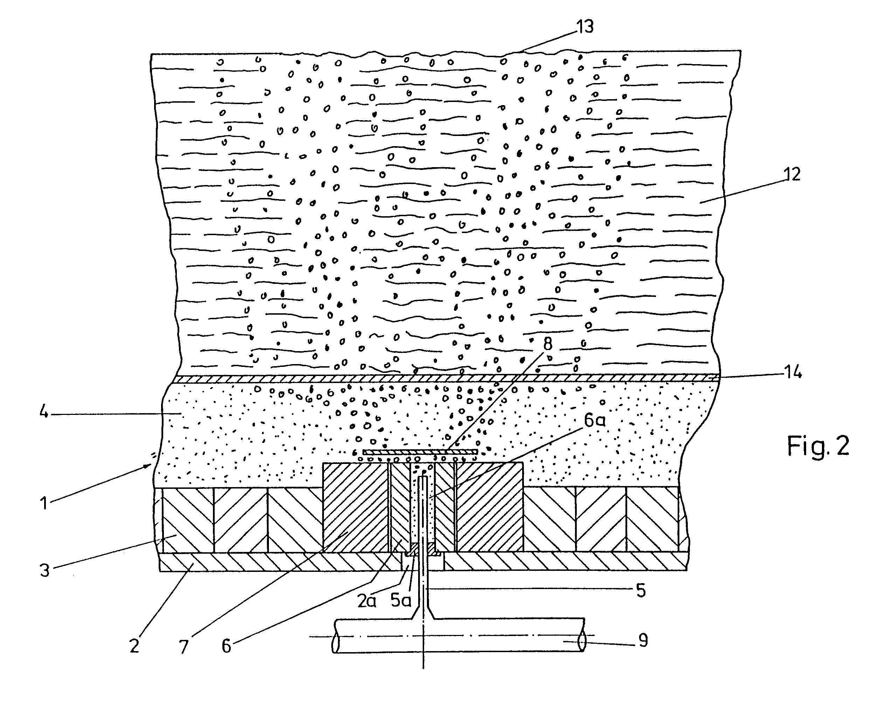

In den Figuren 1 und 2 ist der Herd 1 eines Elektro-Lichtbogenofens in Teilschnitten dargestellt. Auf dem metallurgischen Bodenblech 2 des Ofens liegt das Dauerfutter 3 aus dichtgemauerten feuerfesten Steinen. Oberhalb des Dauerfutters 3 befindet sich das Verschleißfutter 4 des Herdes 1 aus feuerfester Stampfmasse. Besonders geeignet ist beispielsweise eine Trockenstampfmasse aus Sintermagnesit mit hohem CaO- und vermindertem $Fe_2O_3$-Gehalt mit folgender Zusammensetzung:

| | |
|---|---|
| MgO | 76 Gew.-% |
| CaO | 19 Gew.-% |
| $Al_2O_3$ | 0,5 Gew.-% |
| $SiO_2$ | 0,5 Gew.-% |
| $Fe_2O_3$ | 3,5 Gew.-% |

| | |
|---|---|
| Bindung: | keramisch; |
| Körnungsbereich: | 8 mm; |
| Schüttgewicht: | 2,3 kg/dm³ |
| Rohdichte nach Trocknung bei 200°C: | 2,7 g/cm³; |
| Druckfestigkeit nach Glühung bei 1.300°C: | >10 N/mm²; |
| Druckfestigkeit nach Glühung bei 1.600°C: | >20 N/mm²; |
| Wärmeleitzahl bei 1.000°C: | 1,3 W/mk; |
| Anwendungsgrenze: | >1.750°C. |

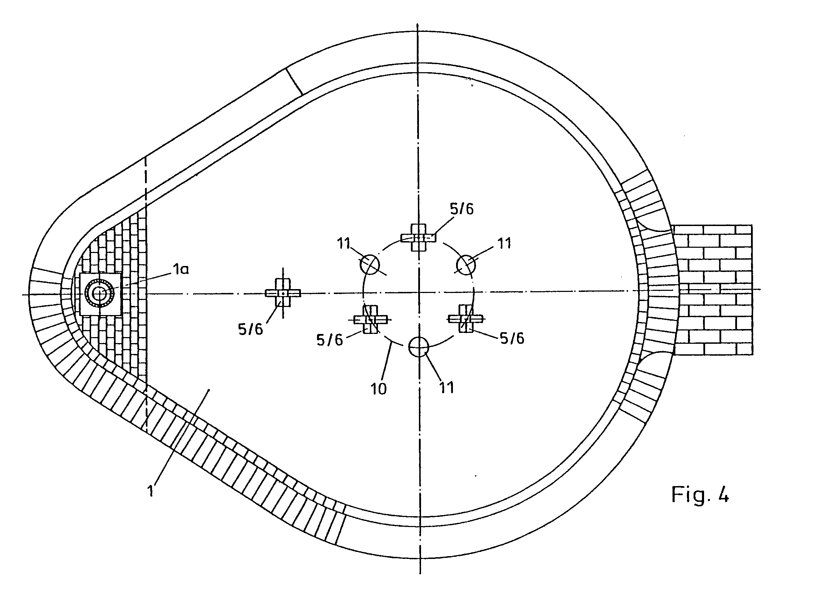

In die dichtgemauerten Steine des Dauerfutters 3 sind feuerfeste Bodensteine 6 mit einer Durchgangsöffnung 6a eingesetzt. Die Bodensteine 6 sind zur Stützung an den Längsseiten von insgesamt sechs Bodensteinen 7 ohne Durchgangsöffnung umgeben, wie Fig. 3 zeigt.

# EP 0 320 673 B1

Durch eine Offnung 2a im Bodenblech 2 ragt ein Spülrörchen 5 von unten in die Durchgangsöffnung 6a des Bodensteines 6 hinein. Zur Abdichtung dient eine Dichtung 5a; ferner ist der freie Zwischenraum zwischen dem Röhrchen 5 und der Durchgangsöffnung 6a mit einem Mörtel ausgefüllt. Oberhalb des Bodensteines 6 ist ein Leitblech 8 im Verschleißfutter 4 angeordnet. Bei einem inneren Durchmesser d des Spülröhrchens 5 von 4,8 mm beträgt der Durchmesser D les Leitbleches 8 250 mm, während sich der Abstand A des Leitbleches 8 vom Bodenstein 6 auf etwa 10 mm beläuft (Fig. 1 und 2).

Das Spülgas, das über das Zuleitungsrohr 9 zu den Spülröhrchen 5 geleitet wird, tritt mit einem Druck von 1,5—2,5 bar bei gefülltem Ofen (mit 1 bar bei leerem Ofen) in das Verschleißfutter 4 aus feuerfester Stampfmasse ein. Durch das Leitblech 8 wird das Spülgas gleichmäßig verteilt und tritt an der Oberfläche des Verschleißfutters 4 in die darüber befindliche Metallschmelze 12 ein und bildet an ihrer Oberfläche einen Spülfleck 13. Bei Durchtritt durch das Verschleißfutter 4 kühlt das Spülgas die feuerfeste Stampfmasse. Der Durchmesser des Spülfleckes 13 in der Schmelzbadoberfläche wird erstens durch Größe und Anordnung des Leitbleches 8 und zweitens durch die Dichte und Dicke und gesinterten Schicht 14 des Verschleißfutters bestimmt. Durch das Leitblech werden die austretenden Gasblasen auf eine größere Austrittsfläche verteilt, und damit wird die Schmelzbadoberfläche insgesamt ruhiger. Es treten weniger Metallspritzer aus der Schmelzbadoberfläche aus. Die über der Schmelzbadoberfläche nicht dargestellten Elektroden 1 werden weniger mit Metallspritzern beaufschlagt. Insgesamt ergibt sich ein gleichmäßigeres und ruhigeres Brennen der Lichtbögen (Fig. 2).

Durch das Lietblech 8 wird erstens ein Durchblasen des aus Stampfmasse bestehenden Verschleißfutters und damit die Ausbildung trichterförmiger Auswaschungen vermieden, die die Ursache für einen vorzeitigen Verschleiß im Spülerbereich sind und zweitens durch die weiträumige Verteilung der Gasblasen in der Stampfmasse eine starke Kühlwirkung erzielt, die die Herdhaltbarkeit wesentlich erhöht.

Wie Fig. 3 zeigt, sind bevorzugt vier Spüleinrichtungen 5, 6 im Herd 1 des Elektro-Lichtbogenofens angeordnet, von denen drei auf dem Elektrodenteilkreis 10 jeweils mittig zwischen den Elektroden 11 und eine weitere Anordnung 5, 6 zentral im Herd 1 angeordnet sind. Diese Anordnung führt zu einer besonders guten Badenregung und Intensivierung der metallurgischen Reaktionen im Elektro-Lichtbogenofen.

Fig. 4 zeigt den Herd 1 eines Elektro-Lichtbogenofens mit exzentrischem Bodenabstich 1a. Drei Spüleinrichtungen 5; 6 sind wie beim Herd der Fig. 3 auf dem Elektrodenteilkreis 10 jeweils mittig zwischen den Elektroden 11 angeordnet. Bei diesem Herd sitzt jedoch eine weitere Spüleinrichtung 5, 6 mit Vorteil in dem Bodenbereich des Herdes 1, der an den Bodenabstich 1a angrenzt. Durch Einleitung von Spülgas in diesen Bereich kann dort insbesondere eine verbesserte Schrotteinschmelzung erreicht werden.

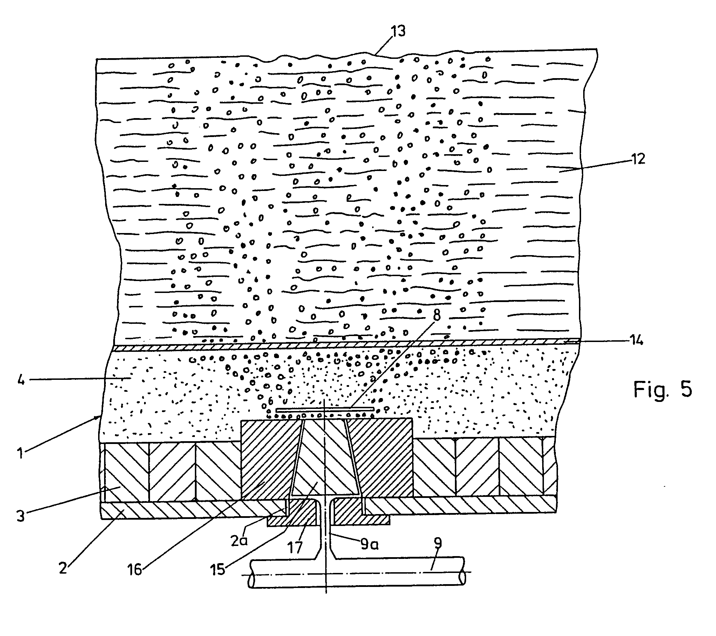

Fig. 5 dient zur Erläuterung einer zweiter erfindungsgemäßen Spüleinrichtung. Wie in Fig. 2 ist der Herd des Elektro-Lichtbogenofens mit 1 bezeichnet worden. Auf dem Bodenblech 2 ist das Dauerfutter 3 aus dichtgemauerten feuerfesten Steinen angeordnet; oberhalb des Dauerfutters befindet sich das Verschleißfutter 4 aus feuerfesten Stampfmasse. Die Spüleinrichtung besteht aus einem blechummantelten feuerfesten keramischen Spülstein mit Gaszuleitungsrohr 9a. Der kegelige Spülstein 15, der in einem feuerfesten Lochstein 16 sitzt wird durch die Öffnung 2a im Bodenblech 2 eingeführt und mit einem Flansch 17, der am Bodenblech 2 befestigbar ist, gehalten. Oberhalb des Spülsteines 15 ist ein Leitblech 8 im Verschleißfutter 4 angeordnet in einer Entfernung von ca. 30 mm von der Oberkante des Spülsteines 15 und des Lochsteines 16. Der Durchmesser des Bodenbleches 8 wird, wie Fig. 5 zeigt, größer als der kleinste Durchmesser des kegeligen Spülsteines 15 gewählt. Wie bei der Ausführungsform gemäß Fig. 2 bereits geschildert, wird das Spülgas über das Hauptzuleitungsrohr 9 und das jeweilige Zuleitungsrohr 9a zu den Spülsteinen 15 geleitet und tritt in das Verschleißfutter 4 aus feuerfester Stampfmasse ein. Wie bereits beschrieben, kühlt das durchgeleitete Spülgas die feuerfeste Stampfmasse des Verschleißfutters 4. Durch das Leitblech werden die austretenden Gasblasen auf eine größere Austrittsfläche verteilt, so daß an der Schmelzbadoberfläche ein Spülflech 13 mit einem großen Durchmesser entsteht. Dadurch wird die Schmelzbadoberfläche insgesamt ruhiger.

Bei den beschriebenen Ausführungsbeispielen ist das Leitblech 8 als ebene Scheibe dargestellt worden. Es kann jedoch auch hutartig ausgebildet sein und zusätzlich kann es mit Bohrungen versehen sein. Hierdurch kann die Verteilung der Gasblasen in der Schmelze und die Ausbildung des Spülfleckes positiv beeinflußt werden.

## Patentansprüche

1. Metallurgisches Gefäß, insbesondere Elektro-Lichtbogenofen, zum Einleiten von Spülgasen in eine Metallschmelze mit einem äußeren Blechmantel und einer feuerfesten Auskleidung sowie mit Spüleinrichtungen, die im Herd oder Boden angeordnet sind und bei dem der Herd oder Boden aus einem Dauerfutter aus Feuerfest-Steinen und einem Verschleißfutter aus feuerfester Stampfmasse besteht, dadurch gekennzeichnet, daß die Spüleinrichtung (5, 6; 15, 16) im Dauerfutter (3) angeordnet ist und oberhalb der Spüleinrichtung im Verschleißfutter (4) ein Leitblech (8) vorgesehen ist.

2. Metallurgisches Gefäß nach Anspruch 1, dadurch gekennzeichnet, daß die Spüleinrichtung aus Röhrschen (5) besteht und daß im Dauerfutter (3) Bodensteine (6) mit einer Durchgangsöffnung (6a) angeordnet sind, in welche die Röhrchen (5) durch eine Öffnung (2a) im Bodenblech (2) hineinragen.

3. Metallurgisches Gefäß nach Anspruch 1 und 2, dadurch gekennzeichnet, daß der innere Durchmesser d der Röhrchen (5) 1—8 mm beträgt.

4. Metallurgisches Gefäß nach Anspruch 1 bis 3, dadurch gekennzeichnet, daß das Verhältnis des Durchmessers D des Leitbleches (8) zum inneren Durchmesser d der Röhrchen (5) 40:1 bis 100:1 beträgt.

5. Metallurgisches Gefäß nach Anspruch 1 bis 4, dadurch gekennzeichnet, daß der Abstand A des Leitbleches (8) vom Bodenstein (6) dem Zwei- bis Dreifachen des inneren Durchmessers d der Röhrchen (5) entspricht.

6. Metallurgisches Gefäß nach Anspruch 1, dadurch gekennzeichnet, daß die Spüleinrichtung als feuerfester keramischer Spülstein (15) mit einem zugehörigen feuerfesten Lochstein (16) ausgebildet und im Dauerfutter (3) angeordnet ist.

7. Metallurgisches Gefäß nach Anspruch 1, und 6, dadurch gekennzeichnet, daß der Abstand A des Leitbleches (8) vom Spülstein (15) 5 bis 50 mm beträgt.

8. Elektro-Lichtbogenofen nach Anspruch 1 bis 7, dadurch gekennzeichnet, daß drei Spüleinrichtungen (5, 6; 15, 16) auf dem Elektrodenteilkreis (10) jeweils mittig zwischen den Elektroden (11) und eine weitere Spüleinrichtung (5, 6; 15, 16) zentral im Herd (1) angeordnet sind.

9. Elektro-Lichtobogenofen mit einem exzentrischen Bodenabstich (1a) nach Anspruch 1 bis 7, dadurch gekennzeichnet, daß drei Spüleneinrichtungen (5, 6; 15, 16) auf dem Elektrodenteilkreis (10) jeweils mittig zwischen den Elektroden (11) und eine weitere Spüleinrichtung (5, 6; 15, 16) außerhalb des Elektrodenteilkreises (10) im Bereich des Bodenabstisches (1a) angeordnet sind.

## Revendications

1. Récipient métallurgique, en particulier un four à arc électrique pour enovyer des gaz de circulation dans une masse de métal fondu, avec un manteau en tôle extérieur et un revêtement réfractaire, ainsi qu'avec des dispositifs de circulation qui sont disposés dans le creuset ou le fond, et dans lequel le creuset ou le fond est constitué d'un revêtement de sécurité en mattes réfractaires et d'un revêtement d'usure en pisé réfractaire, caractérisé en ce que le dispositif de circulation (5, 6; 15, 16) est disposé dans le revêtement de sécurité (3) et une chicane (8) est prévue au-dessus du dispositif de circulation dans le revêtement d'usure (4).

2. Récipient métallurgique selon la revendication 1, caractérisé en ce que le dispositif de circulation est constitué de tubes (5) et que des mattes de fond (6) sont disposées dans le revêtement de sécurité (3) avec une ouverture traversante (6a), à l'intérieur de laquelle les tubes (5) font saillie à travers une ouverture (2a) dans la tôle de fond (2).

3. Récipient métallurgique selon la revendication 1 et 2, caractérisé en ce que le diamètre intérieure $d$ des tubes (5) est de 1—8 mm.

4. Récipient métallurgique selon la revendication 1 et 2, caractérisé en ce que le rapport du diamètre D de la chicane (8) au diamètre intérieur $d$ des tubes (5) est compris entre 40:1 et 100:1.

5. Récipient métallurique selon la revendication 1 à 4, caractérisé en ce que la distance A de la chicane (8) à la matte de fond (6) correspond au double jusqu'au triple du diamètre intérieur $d$ du tube 5.

6. Récipient métallurgique selon la revendication 1, caractérisé en ce que le dispositif de circulation est constitué par une matte de circulation (15) céramique réfractaire avec une brique de brûleur (16) adjointe et est disposé dans le revêtement de sécurité (3) du récipient métallurgique.

7. Récipient métallurgique selon la revendication 1 et 6, caractérisé en ce que la distance A de la chicane (8) à la matte de circulation (15) est de 5 à 50 mm.

8. Récipient métallurgique selon la revendication 1 à 7, caractérisé en ce que trois dispositifs de circulation (5, 6; 15, 16) sont disposés sur l'arc de cercle des électrodes (10) respectivement centralement entre les électrodes (11) et un dispositif de circulation supplémentaire (5, 6; 15, 16) est disposé centralement, dans le creuset (1).

9. Four à arc électrique avec une coulée par le fond (1a) excentrique selon la revendication 1 à 7, caractérisé en ce que trois dispositifs de circulation (5, 6; 15, 16) sont disposés sur l'arc de cercle des électrodes (10) respectivement centralement entre les électrodes (11) et un dispositif de circulation supplémentaire (5, 6; 15, 16) est disposé en dehors de l'arc de cercle des électrodes (10) dans la région de la coulée de fond (1a).

## Claims

1. A metallurgical vessel, more particularly an electric arc furnace, for introducing stirring gases into a metal melt, having an outer sheet metal jacket, a refractory lining, and stirring devices disposed in the furnace hearth or bottom, the furnace hearth or bottom comprising a permanent lining of refractory bricks and a wear lining of a refractory ramming mass, characterized in that the stirring device (5, 6; 15, 16) is disposed in the permanent lining (3) and a deflector plate (8) is disposed in the wear lining (4) above the stirring device.

2. A metallurgical vessel according to Claim 1, characterized in that the stirring device consists of small tubes (5) and disposed in the permanent lining (3) are bottom bricks (6) formed with an aperture (6a) into which the small tubes (5) extend through an opening (2a) in the bottom plate (2).

3. A metallurgical vessel according to Claims 1 and 2, characterized in that the internal diameter d of the small tubes (5) is 1—8 mm.

5

4. A metallurgical vessel according to Claims 1 to 3, characterized in that the ratio between the diameter D of the deflector plate (8) and the internal diameter d of the small tubes (5) is 40:1 to 100:1.

5. A metallurgical vessel according to Claims 1 to 4, characterized in that the distance A of the deflector plate (8) from the bottom brick (6) is twice to three times the internal diameter d of the small tubes (5).

6. A metallurgical vessel according to Claim 1, characterized in that the stirring device takes the form of a refractory ceramic stirring plug (15) with an associated refractory seating block (16) and is disposed in the permanent lining (3).

7. A metallurgical vessel according to Claims 1 and 6, characterized in that the distance A of the deflector plate (8) from the gas stirring plug (15) is 5 to 50 mm.

8. An electric arc furnace according to Claims 1 to 7, characterized in that three stirring devices (5, 6; 15, 16) are disposed on an electrode pitch circle (10), each in the centre between the electrodes (11), a further stirring device (5, 6; 15, 16) being disposed centrally in the furnace hearth (11).

9. An electric arc furance having an eccentric bottom tap (1a) according to Claims 1 to 7, characterized in that three stirring devices (5, 6; 15, 16) are disposed on the electrode pitch circle (10), each centrally between the electrodes (11), and a further stirring device (5, 6; 15, 16) is disposed outside the electrode pitch circle (10) in the zone of the bottom tap (1a).

Fig. 1

Fig. 3

1

Fig. 2

EP 0 320 673 B1

Fig. 4

Fig. 5